# EUROPEAN PATENT SPECIFICATION

(11) **EP 1 352 312 B1**
(45) Date of publication and mention of the grant of the patent: **29.03.2006**
(21) Application number: 02729426.3
(22) Date of filing: 03.01.2002
(51) Int. Cl.: G06F 1/00, G06F 17/30, H04L 29/06

(54) **A METHOD AND SYSTEM FOR COMBATING ROBOTS AND ROGUES**
METHODE UND SYSTEM ZUR BEKÄMPFUNG VON ROBOTS UND ROGUES
PROCEDE ET SYSTEME DE LUTTE CONTRE DES ROBOTS ET DES PIRATES

(30) Priority: 09.01.2001 GB 0100547
(43) Date of publication of application: 15.10.2003
(73) Proprietor: Searchspace Limited, London WC1A 1HB (GB)
(72) Inventor: FELDMAN, Konrad, Simeon, c/o Searchspace Corp., New York, NY 10038 (US); KINGDON, Jason, c/o Searchspace Limited, London WC1A 1HB (GB); RECCE, Michael, c/o Searchspace Corp., New York, NY 10038 (US)
(74) Representative: Jackson, Richard Eric
(86) International application number: PCT/GB2002/000002
(87) International publication number: WO 2002/056157

(56) References cited:
- WO-A-00/08573
- WO-A-00/79449
- WO-A-99/39281
- WO-A-99/60462
- ANONYMOUS: "How to keep bad robots, spiders and web crawlers away" INTERNET ARTICLE, [Online] vol. 1, XP002194208 Retrieved from the Internet: <URL:http://web.archive.org/web/*/http://w ww.fleiner.com/bots/> [retrieved on 2000-08-31]
- SXW TARDIS.ED.AC.UK: "Watching the Robots" INTERNET ARTICLE, [Online] vol. 1, 16 August 2000 (2000-08-16), XP002194207 Retrieved from the Internet: <URL:http://web.archive.org/web/*/http://w ww.tardis.ed.ac.uk/~sxw/robots/> [retrieved on 2000-08-16]

## Description

The present invention relates to a method and system for the prevention of rogue use of web-sites and the like. More specifically, the present invention relates to a method and system for combating the use of such web-sites and the like by web robots and other such rogue entities, including humans acting akin to web robots.

A web robot is an entity which has been designed to carry out a specific task on the internet without the need for human interaction therewith. Two contrasting examples are presented here for clarity.

A first web robot may be utilised by an internet search engine to work its way through pages on the internet (this is commonly termed web crawling), following the links it encounters, in order to provide a useful resource to the search engine users. In other words, this web robot follows links through successive pages, in a periodic fashion, e.g. once every week, in order to accommodate web site updates, and provide information to the search engine in order that it may update its links thereby providing an up to date resource.

A second type of web robot, which may in some circumstances be viewed as an anathema, is an entity which is configured to carry out a set of instructions continuously. For example, many web-sites operate points or reward schemes, wherein points are allocated upon registration and subsequently for the carrying out of various actions for example. A web robot could be utilised to carry out these actions, thereby achieving the allocation of points without the value to the point provider of their site having been viewed by the intended human user.

At the present time, there are an Increasing number of people/users accessing online resources. Similarly, there are an increasing number of automated systems (robots) accessing resources. In addition to these two factors, it is known that many internet sites or resources rely upon advertising revenue to cover their costs and, as has already been mentioned, loyalty schemes and points accumulation schemes are now being utilised as an incentive to draw users to given sites. Hence, web robots of the second type described above, and even the first type, may be viewed as a problem, because they can utilise resources without providing a return to the resource provider, i.e. without a human user having viewed the proffered advertisement, for example.

Online resources can easily be repackaged and reused. An example of such an occurrence is a meta search engine. Search engines, such as Alta Vista™, All the Web™ and Google™ provide a straightforward means to search the internet through user entered text queries. These sites are increasingly being used by meta-search engines, such as the engines which may be found at www.metacrawler.com, www.all4one.com, and www.mamma.com, which perform multiple queries using different engines simultaneously. Web-sites are also subject to automated analysis and querying from web-robots performing data gathering and other automated tasks such as the triggering of Common Gateway interface (CGI) or server side programs, the navigation of content or entry of information in return for some form of value equivalent, as has been mentioned previously.

Commercial sites may wish to prevent robots or the use of pages by meta-search engines. Although a web robot exclusion standard exists the code is voluntary and robots may choose to ignore it The robots exclusion standard or protocol is a scheme by which an administrator of a web-site is enabled to indicate to robots visiting the site those parts of the site it should not access. When a robot accesses a site, it is meant to look first for the file setting out this standard or protocol. However, meta search engines, for example, and other robots ignore this procedure. Thus, there currently exists no effective way of preventing unwanted robot or rogue activity at a web-site.

This takes on more importance when considering advertising on web-sites as a means of revenue generation. There exists a need to guarantee that site visitors are legitimate users and, accordingly, a need to differentiate between types of system users. This will enable advertisers to be reassured that the dissemination of their adverts is to legitimate users and will allow the material being advertised to be selectively targeted to appropriate users. Service misuse by robots or rogues can lead to the denial of that service to legitimate system users, which itself leads on to undesirable direct costs to a business (i.e. the business running the web-site) and indirect costs associated with the loss of revenue or the congestion of system resources.

"How to keep bad robots, spiders and web crawlers away", http://web.archive.org/web/*/http:/www.flleiner.com/bots. discloses a way of catching bad robots and banning them from making further accesses by blocking IP addresses from detected robot computers".

In view of the above, the inventors have found that there exists a need for an effective and efficient way of combating undesired robot or rogue activity at a web-site.

With the foregoing in mind, there is provided a method of combating unwanted robot activity at a web site, as claimed in claim 1:

The present invention provides the advantages that it prevents misuse of system resources. Web page usage by unauthorised external organisations, repackaging of resources and meta usage is effectively prevented. Additionally, the invention serves as preventative to the unfair accumulation of points in a loyalty scheme or other such scheme that offers incentives to users visiting an internet resource. Another advantage is the validation of legitimate user access **numbers. This enables a site to provide concrete information to potential** advertisers as to the scope of potential advert dissemination. Finally, the present invention serves as a fraud preventative. It will act to prevent unscrupulous persons setting up web-sites with associated advertising and revenues therefrom, then setting up a robot to boost access thereto, thereby providing a boost to revenue generated.

In a preferred embodiment the present invention, the step of detecting such accesses includes initially identifying a possible robot or robot-like access to a web-site, and carrying out one or more checks in order to determine the status of an entity making the access.

Preferably a differentiation between the behavioural characteristics of different users is utilised to facilitate detection.

Preferably, the obstacles may include the generation of a warning or notification of site access abuse. The generated warning or notification may be delivered to one or more of a suspected robot system, a user thereof, an operator or owner of the site experiencing abuse, a monitoring station or an enforcement agency.

In a still further preferred embodiment, the step of monitoring is carried out both in real time and offline. Preferably the step of monitoring includes one or more of monitoring:
failed page requests, failures associates with forms or other system accesses;
**IP addresses accessing the web-site;**
**modification and updating of cookies;**
watch lists; and
user registration details, user profiles, user domains or user access times.

Also in accordance with the present invention there is provided a system configured to combat unwanted robot activity at a web-site as claimed in claim 10 hereinafter.

Of course, there may be circumstances when obstacles will not be generated or rolled out. Such a circumstance may be the detected presence at a web-site of a web-robot authorised to be there, for example.

Preferably, the system comprises one or more built in obstacles to rogue or robot accesses.

Preferably, the obstacles built in to the system include at least one of a regular web-site reconstruction scheme, changes to form fields within the web-site and robot or rogue traps, including recursive loops. Still more preferably, the obstacles rolled out may include a generated warning or notification of web-site abuse by a rogue or robot. The generated warning or notification may be delivered to one or more of a suspected rogue or robot system or the user(s) thereof. Notification to a monitoring station or enforcement agency etc. may also occur. Such station or agency may be a public or private body, for example.

In a preferred embodiment of the present invention, the detection system monitors one or more of:
failed page requests, failures associated with frames or other system accesses;
**IP** addresses seeking access;
modification and updating of cookies;
watch lists; and
user registration details, user profiles, user domains or user access times.
Further, depending upon the version of browser being utilised, for example, the system may access and/or monitor further information which is made available, by the browser or the system supporting the browser, about the user thereof.

In a still further preferred embodiment of the present invention, the system further includes a data store in which is recorded the monitored and/or detected details or characteristics.

A specific embodiment of the present invention is now described, by way of example only, with reference to the accompanying drawings, in which:-
Figure 1 is an illustration of one possible implementation of the system of the present invention;
**Figure 2 is a flow diagram presenting an overview of the method of the present invention; and**
Figure 3 is a flow diagram setting forth in detail the method according to the present invention.

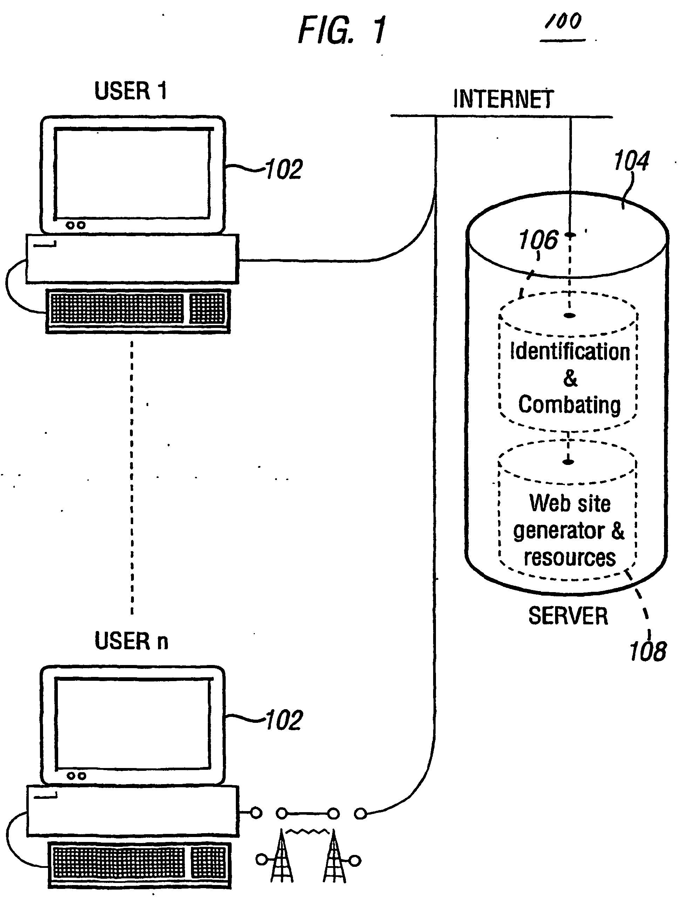

Referring to Figure 1 of the drawings, the system 100 comprises a number of discrete and yet interconnectable elements. Firstly, there are a number of user remote terminals 102 and secondly there is a remote system module or server 104. Each user may connect to the server in order to access the resource(s) thereon. Such a connection is by way of the internet or any other communication channel such as an in-house intranet, and may utilise fixed connection communication systems, mobile or air interface communications or any other suitable communications system.

As may be seen, the system of the present invention, herein labelled "identification and combating" 106 resides within the server 104, alongside and connectable with a web-site generator and resources 108. However, in another embodiment, the "identification and combating" module 106 may reside on a server containing no web-site generator and resources, but connectable with a second server containing such generator and resources. The identification and combating module serves to regulate the access of web robots or rogues/rogue users to the web-site generated or accessed upon request.

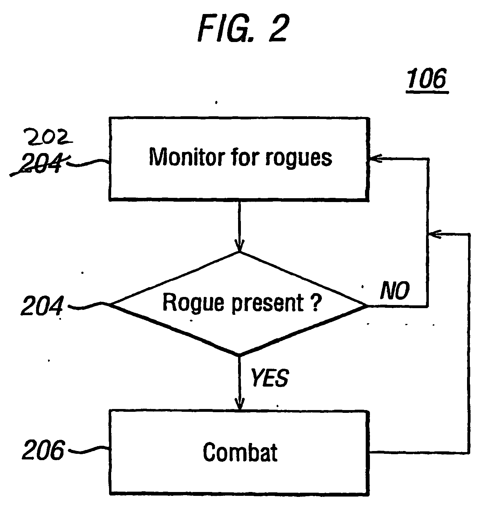

The operation of the system of Figure 1 will now be described with reference to Figure 2. As may be seen, the identification and combating module 106 operates as follows. The module may reside alongside a web-site to which access is sought, and, when so arranged, monitors the access requests and accesses made to the web-site (Function Box 202). Of course, the module may reside independently of a web-site, i.e. elsewhere on a server or on a separate server for example, or the like and still operate to monitor access thereto. At such time that the monitoring of such access requests and accesses indicates that a robot or rogue is present and is accessing the web-site (Function Box 204), the module may generate or utilise preventative measures, should it so require, in order to limit the access available to the robot or rogue, or to terminate the connection therewith and thwart any attempts to re-establish connection (Function Box 206). In other words, the system may combat the identified web robot or rogue/rogue user.

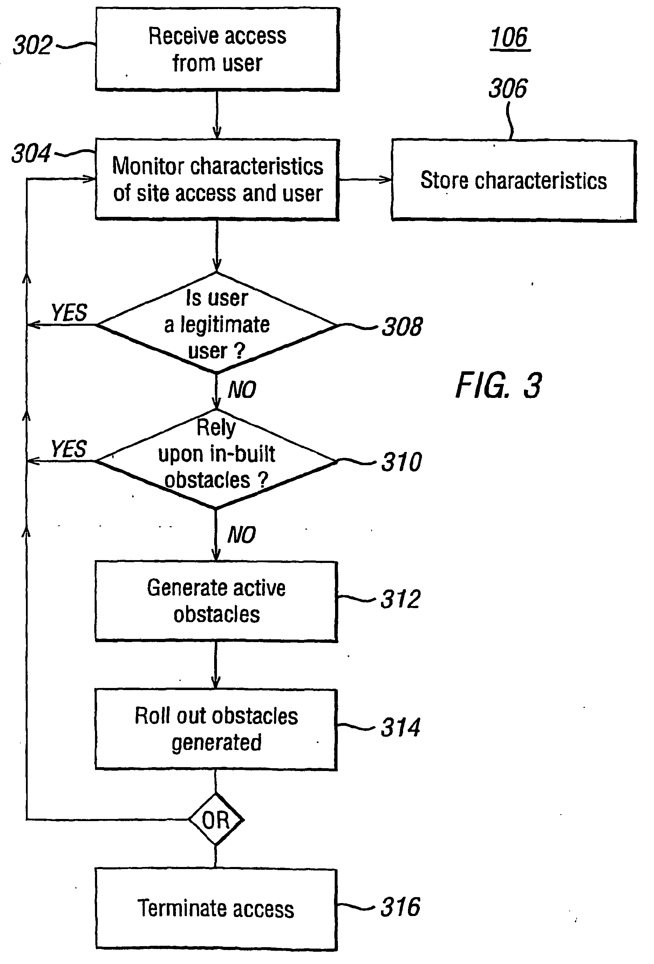

The operation of the system is now described in greater detail with reference to Figure 3. As is evident, the identification and combating module 106 monitors the accesses and access requests made to the web-site. Initially, those requests etc. are received by the module (Function Box 302) in order that the module can monitor the characteristics of the site access session and the user, i.e. in order to attempt to detect a rogue or robot entity (Function Box 304). Monitoring of the accesses and access requests made to the web site in order that robots or rogues can be detected is carried out both in real time, i.e. whilst such accesses are occurring, and offline.

When monitoring in real time, simple metrics are required in order that they may be carried out with speed. The requirement of speed of processing is inherent in real time operations. A prime example of a real time metric is the imposition of an access frequency threshold. For example, a human user may be expected to access a web-site three times in a day, whereas a web-robot could feasibly access a web-site many times a second. As such, a realistic access frequency threshold may be set If that frequency is exceeded, access may be refused.

Offline monitoring techniques can afford to be more time intensive. These techniques typically include, but are not restricted to, the correlation of patterns. Patterns may be found in, for example, multiple registrations at one location, user registration details and the like.

When monitoring, certain characteristics and events are watched for. These include, but are not restricted to, failed page requests, failures associated with forms or other system accesses, the recurrence of IP addresses seeking connection to the site, cookie modification and updates, watch lists, the recurrence of user registration, profiles and other details, including email or physical addresses, domains and access times, etc. A big indication of robot use of a web-site is the frequency of web-site visits by a user or a number of users. The monitoring of this feature allows a pattern of use of the web-site to be established. For example, if a user accesses a site ten times a second, it is an indication that the user is a web-robot.

The detection of web robots or rogues requires analysis of user activity to be carried out in order that anomalous behaviour, potentially indicative of system resource, reward scheme or other such abuse, may be identified. In order to detect rogue activity, certain transaction or access details need to be collected. Accordingly, various of the monitored characteristics are stored for use in detection (Function Box 306). Such information is detailed below. However, whilst all of the below information may be useful, it will not necessarily all be stored in each implementation of the present invention. Storage is provided in the form of an area of memory allocated for this purpose, either on the server or elsewhere.
- **Tracking failed attempts to access system resources.** This may or may not be synonymous with failed attempts to obtain rewards. Currently, in points awards (reward) schemes on web-sites, web-servers only supply information to databases/storage systems regarding successful point grants. It Is likely that in finding methods to successfully automatically redeem points, robot driven accounts will also fail to accumulate points from certain activities. These failures provide valuable information relating to rogue point accumulation and the transactions, or a condensed representation of them, are stored for subsequent analysis. This is also true for systems wherein system resources are attempted to be accessed. Storage of failed attempts to access and/or utilize system resources will provide valuable information relating to rogue access attempts.
- **Track the IP addresses for each page request.** This provides valuable information for subsequent analysis and can be used directly to prevent point accumulation for a single account given requests from different nodes. e.g. different PC's simultaneously (or in a short period of time). Thus, IP addresses requesting pages are stored. In other words, the IP address of a machine makes known that machines rough geographic location. This information can be used to determine the feasibility of that machine having made accesses to a system from different locations, such as the U.K. and North America, for example.
- **Track total point accumulation from single or groups of IP addresses.** Multiple legitimate users may go through a single router, but subsequent pooling may be indicative of fraudulent behavior. Accordingly, point accumulation, etc., per IP address or group of IP addresses is stored, where appropriate. This applies specifically to schemes where pooling of rewards/points and their subsequent transfer into a single account is permitted. The information stored is used to attempt to determine patterns of co-ordinated behaviour by users. This may be valid behaviour or may be illicit behaviour.
- **Store a longer period of transactions.** Currently, full transaction or access histories in the form of the web logs generated by the web server are only maintained for a very short period of time. Longer periods of transactions, or condensed representations thereof, may yield additional information of value in the detection of robot based point accumulation and are thus stored. This may further benefit the assessment of the likelihood of an event actually occurring. Thus if an event considered unlikely to occur does occur, it may be treated with suspicion by the system.
- **Watch list creation.** On the basis of the identification of unusual behavior by registered users, it is desirable to make a note of that user's identification so that subsequent interaction can automatically be more rigorously interrogated. In combination with the first item listed above, this provides a mechanism for intelligence to be gathered regarding a reward scheme that may serve as 'clues', aiding in the subsequent detection of anomalous behavior. The use of watch lists may supplement real time monitoring techniques. For example, a watch list may be used to check for an attempted access by a particular user and, if that user does attempt to access the web-site or system, to cause access to be disallowed.

Watch lists are also used to store information (if possible) regarding anonymous users. The reasoning for this is that those wishing to create robots capable of accumulating points from a reward scheme, for example, will most likely utilise anonymous accounts whilst developing their technology. Thus, failed attempts at point collection by anonymous users may reveal useful information for cross-referencing future successful point accumulation activity.

In combination with other detection methods, watch lists provide a powerful mechanism for the detection of robot attacks. Even if a user is creating increasingly sophisticated robots, their prior attempts at robot intrusion will include them on the watch list, thus ensuring that all subsequent (and potentially related) activity can be carefully scrutinized.

Watch lists need not be based solely on the account identified. Watch lists can be maintained based upon any detail provided within the registration process and can thus be used to detect repeat distributed, or masked, attacks.
- **Registration Information and Free Form Fields.** In order to accumulate points from a reward scheme and achieve redemption, users must register. Significant incentives are, and should be, put in place to convince registered users to provide additional information. If relevant, free form entry fields should also be provided. Consider password hint fields currently used in various websites/resources. Since these are free form text, the entries provided by users should be expected to have a larger expected deviation compared with the list select fields present. This variation will be more difficult to achieve systematically with a robot. Similarly, other free form fields used either at registration or intermittently during site usage, may provide an additional means of identifying robot attacks.

Registration analysis also undertakes routine postal address and zip code checks. Soundex (a system developed by the U.S. Government) and other matching methods may be used to identify multiplicity of registration. Further, the time periods between registrations from multiple similar addresses can be assessed for Indications of mechanised registration processes.

If, during the monitoring step (Function Box 304), a rogue user or robot is suspected, further detection means are employed to attempt to ascertain with certainty whether the user is indeed a robot or rogue. Detection methods used include the application of Intelligent systems and traditional statistical and algorithmic techniques to differentiate between user behavioural characteristics. These techniques may or may not utilise one, some or all of the stored characteristics detailed above. For example, one form of analysis focuses on web-logs in order to provide frequency of access analysis. This allows the probability/likelihood of an event occurring to be estimated. A second form of analysis focusses on registration and IP information. This second form looks at how many people are purported to live at a single address, how many people are utilising an identical or similar password field, and/or zip or post codes, for example.

Once it is established (Function Box 308) that a robot or rogue is present and is accessing the web-site, a decision (Function Box 310) is taken by the system whether to rely upon built-in (passive) obstacles of the system to deter the rogue or robot, or whether to employ active obstacles. The former will be described first.

Passive obstacles or deterrents are elements within the construction of the web-site or resource that are robot unfriendly. In other words, they have measures taken to attempt to confuse or trip up a robot. These may include regular site reconstruction, changes to form fields and web robot traps, such as recursive loops. Looking at the last of these in more detail, the system introduces recursive loops to trap robots and dumb crawlers. Each URL within a web-site is different, with the intention of fooling robots. These loops can be pre-determined to be of substantial length, thus ensuring that human users would quickly give up and enabling straightforward identification of simple robots.

If the system determines that the passive obstacles contained therein are insufficient to ensure the robot or rogue does not access either the web-site or areas thereof that it wishes to protect, or if the system wishes to eject the robot or rogue, it generates (Function Box 312) active obstacles. Of course, other external methods to protect the system, such as the suspension of an account, the termination of access or bandwidth limitation may be utilised.

Automated page access methods assume defined page configurations and layouts. Robots use template matching to identify form fields or other elements of page content of interest. By dynamically changing page layout in subtle ways it is possible to prevent or deter automated site access. Humans are obviously adaptable enough to cope with significant changes in layout, but dynamic changes may be subtle enough that a human user is completely unaware of the differences.

There are numerous dynamic layout approaches that may be used to make robot navigation difficult in this way, the system of the present invention may use one or more of these, including:
the use of hidden text, table elements or comment fields to confuse the robot;
changes in field ordering;
the renaming or randomisation of entry fields or form names;
the addition of redundant information (such as one or more intermediate pages) or processing steps (such as one or more confirmation request dialog boxes), redundant (possibly hidden) form fields, page processing steps, re-directs etc.; and
changing the use of frames or tables, or other significant layout changes.

Whilst in many cases it may be best not to notify suspected scheme abusers of their activity, rather to just block them from redeeming merchandise, in certain cases an active response may be appropriate. Such responses range from warning e-mails delivered to the user, to dynamic content adaptation, as already described, in an attempt to fool, or verify, robot attacks. Similarly, warning emails or other such warnings or notifications may be sent to other entities or institutions which may include a monitoring station, an enforcement agency, or the operator of the site which is subject to the detected abuse, for example. Putting an abuser on notice that their abuse has been detected may serve to "scare them off" or cause them to desist such abuse.

Once the appropriate or chosen obstacles have been generated, they are rolled out (Function Box 314). As is detailed above, the obstacles take various forms. Thus, if it is determined to terminate contact with the robot or rogue, such is performed (Function Box 316), otherwise the system returns to the monitoring (Function Box 304) of the access or transaction, and may introduce further dynamic obstacles, in the way described above, if required by the system.

Whilst the present invention has been described with reference to the protection of a web-site utilising a reward scheme, it will be readily appreciated by **the skilled reader that it applies also to internet search engines, and other such** resources, also to the protection of web-sites and resources not utilising reward schemes. Additionally, whilst the invention has been described as a stand alone module connectable to a web-site generator or web-site, it may readily be formed as a component part thereof. In this scenario, the system of the present invention is built into a web-site or internet resource etc. upon construction thereof, or may be incorporated at a later date. A web-site etc. incorporating such a system is provided with the means to detect and combat web-robots illicitly accessing the site, or other rogue behaviour. The site need not interact with a separate module to achieve this, it may run as a stand alone entity, whilst benefiting from the protection afforded by the present invention. Further, in a system or the like where access is legitimate, the system may be used to validate real user statistics, i.e. to authenticate the number of accesses made to a site, for example, by human users.

It will of course be understood that the present invention has been described above by way of example only, and that modifications of detail can be made within the scope of the invention.

## Claims

1. A method of combating unwanted robot or rogue accesses to a web-site, comprising the steps of:
monitoring (202, 304) accesses made to the web-site in order to facilitate the detection of robot or rogue accesses; and
**characterised by** the further steps of:
upon detecting (204, 308) that a robot or rogue access is underway, rolling out (206, 312, 314) one or more obstacles to that access,
wherein the one or more obstacles are forms of dynamic change of page layout within the web-site.

2. A method as claimed in claim 1, wherein the forms of dynamic change of page layout are selected from:
the use of hidden text, table elements or comment fields;
changes in field ordering;
renaming or randomisation of entry fields or form names;
addition of redundant information, intermediate pages, processing steps, redundant form fields, dialog boxes, page processing steps, re-directs; and
changing the use of frames or tables.

3. A method as claimed in claim 1 or claim 2, in which a further obstacle may be selected, that obstacle being the generation of a warning or notification of site abuse.

4. A method as claimed in claim 3, wherein the warning or notification generated is delivered to one or more of a suspected robot system, a user thereof, a rogue system or user, an operator or owner of the site experiencing abuse, a monitoring station or an enforcement agency.

5. A method as claimed in any of claims 1 to 4, in which one or more further obstacles, selected from the limitation of bandwidth, the suspension of an account and the termination of the access may also be selected.

6. A method as claimed in any preceding claim, wherein the step of detecting such accesses includes initially identifying (308) a possible robot or rogue access to a web-site, and carrying out one or more checks in order to further determine the status of an entity making/requesting the access.

7. A method as claimed in any preceding claim, wherein a differentiation between the behavioural characteristics of different users is utilised to facilitate detection.

8. A method as claimed in any preceding claim, wherein the step of monitoring is carried out both in real time and offline.

9. A method as claimed in any preceding claim, wherein the step of monitoring includes monitoring one or more of:
failed page requests, failures associated with forms or other system accesses;
IP addresses accessing the web-site;
modification and updating of cookies;
watch lists; and
user registration, user profiles, user domains or user access times.

10. A system (100) configured to combat unwanted robot or rogue accesses to a web-site, comprising:
at least one detection system (106) configured to receive incoming access requests by a user of the web-site and to detect when a robot or rogue access is underway; and
**characterised by**:
an obstacle generator (106) to generate and roll out one or more obstacles to that access upon its detection,
wherein the one or more obstacles are forms of dynamic change of page layout within the web-site.

11. A system as claimed in claim 10, wherein the forms of dynamic change of page layout are selected from:
the use of hidden text, table elements or comment fields;
changes in field ordering;
renaming or randomisation of entry fields or form names;
addition of redundant information, intermediate pages, processing steps, redundant form fields, dialog boxes, page processing steps, re-directs; and
changing the use of frames or tables.

12. A system as claimed in claim 10 or claim 11, wherein the obstacles selectable for rolling out also include the generation of a warning or notification of site abuse.

13. A system as claimed in claim 12, wherein the warning or notification generated is delivered to one or more of a suspected robot system, a user thereof, a rogue system or user, an operator or owner of the site experiencing abuse, a monitoring station or an enforcement agency.

14. A system as claimed in any of claims 10 to 13, wherein the obstacles selectable for rolling out also include the limitation of bandwidth, the suspension of an account and the termination of the access.

15. A system as claimed in any of claims 10 to 14, wherein the system also comprises one or more built in obstacles to robot or rogue accesses.

16. A system as claimed in claim 15, wherein the obstacles built in to the system include at least one of a regular web-site reconstruction scheme, changes to form fields within the web-site and traps including recursive loops.

17. A system as claimed in any of claims 10 to 16, wherein the detection system monitors one or more of:
failed page requests, failures associated with forms or other system accesses;
**IP addresses seeking access;**
modification and updating of cookies;
watch lists; and
user registration details, user profiles, user domains or user access times.

18. A system as claimed in any of claims 10 to 17, further including a data store in which is recorded the monitored and/or detected details.

## Patentansprüche

1. Verfahren zur Bekämpfung von unerwünschten Robot- oder Rogue-Zugriffen auf eine Webseite, das die folgenden Schritte umfasst:
Überwachen (202, 304) der Zugriffe, die auf die Webseite erfolgen, um die Erfassung von Robot- oder Rogue-Zugriffen zu erleichtern; und
**gekennzeichnet durch** die folgenden weiteren Schritte:
auf das Erfassen (204, 308) hin, dass ein Robot- oder Rogue-Zugriff unterwegs ist, das Entfalten (206, 312, 314) von einem oder mehreren Hindemissen für diesen Zugriff,
wobei die einen oder mehreren Hindernisse Formen der dynamischen Änderung des Seitenlayouts in der Webseite sind.

2. Verfahren nach Anspruch 1, wobei die Formen der dynamischen Änderung des Seitenlayouts ausgewählt werden aus:
der Verwendung von verborgenem Text, Tabellenelementen oder Kommentarfeldern;
Änderungen in der Feldanordnung;
Umbenennung oder Randomisierung von Bearbeitungsfeldern oder Formularnamen;
Hinzufügung von redundanten Informationen, Zwischenseiten, Verarbeitungsschritten, redundanten Formularfeldern, Dialogfenstem, Seitenverarbeitungsschritten, Umleitungen; und
Änderung der Verwendung von Rahmen oder Tabellen.

3. Verfahren nach Anspruch 1 oder Anspruch 2, bei dem ein weiteres Hindernis ausgewählt werden kann, wobei dieses Hindernis die Generierung einer Warnung oder einer Mitteilung eines Seitenmissbrauchs ist.

4. Verfahren nach Anspruch 3, wobei die erzeugte Warnung oder Mitteilung einem oder mehreren aus einem in Verdacht stehenden Robot-System, einem Benutzer davon, einem Rogue-System oder - Benutzer, einer Bedienperson oder einem Eigentümer der Seite, die einen Missbrauch erfährt, einer Überwachungsstation oder einer Kontrollstelle zugestellt wird.

5. Verfahren nach einem der Ansprüche 1 bis 4, bei dem ein oder mehrere weitere Hindernisse, die aus der Begrenzung der Bandbreite, der Sperrung eines Kontos und der Beendigung des Zugriffs ausgewählt werden, ebenfalls ausgewählt werden können.

6. Verfahren nach einem der vorhergehenden Ansprüche, wobei der Schritt des Erfassens von solchen Zugriffen das anfängliche Identifizieren (308) eines möglichen Robot- oder Rogue-Zugriffs auf eine Webseite und das Ausführen von einer oder mehreren Prüfungen zur weiteren Bestimmung des Status einer Instanz, die den Zugriff ausführt/anfordert, umfasst.

7. Verfahren nach einem der vorhergehenden Ansprüche, wobei eine Differenzierung zwischen den Verhaltenscharakteristiken verschiedener Benutzer verwendet wird, um die Erfassung zu erleichtern.

8. Verfahren nach einem der vorhergehenden Ansprüche, wobei der Schritt des Überwachens sowohl in Echtzeit als auch offline durchgeführt wird.

9. Verfahren nach einem der vorhergehenden Ansprüche, wobei der Schritt des Überwachens die Überwachung eines oder mehrerer aus dem Folgenden umfasst:
gescheiterte Seitenanforderungen, Fehler, die mit Formularen oder anderen Systemzugriffen assoziiert sind;
IP-Adressen, die auf die Webseite zugreifen;
Modifikation und Aktualisierung von Cookies;
Kontrolllisten; und
Benutzerregistrierung, Benutzerprofile, Benutzerdomänen oder Benutzerzugriffszeiten.

10. System (100), das so konfiguriert ist, dass es unerwünschte Robot- oder Rogue-Zugriffe auf eine Webseite bekämpft, mit:
wenigstens einem Erfassungssystem (106), das so konfiguriert ist, dass es ankommende Zugriffsanforderungen von einem Benutzer der Webseite empfängt und erfasst, wenn ein Robot- oder Rogue-Zugriff unterwegs ist; und
**gekennzeichnet durch**:
einen Hindemisgenerator (106) zum Generieren und Entfalten von einem oder mehreren Hindemissen für diesen Zugriff bei seiner Erfassung,
wobei das eine oder die mehreren Hindernisse Formen der dynamischen Änderung des Seitenlayouts in der Webseite sind.

11. System nach Anspruch 10, wobei die Formen der dynamischen Änderung des Seitenlayouts ausgewählt werden aus:
der Verwendung von verborgenem Text, verborgenen Tabellenelementen oder Kommentarfeldern;
Änderungen in der Feldanordnung;
Umbenennung oder Randomisierung von Bearbeitungsfeldern oder Formularnamen;
Hinzufügung von redundanten Informationen, Zwischenseiten, Verarbeitungsschritten, redundanten Formularfeldern, Dialogfenstern, Seitenverarbeitungsschritten, Umleitungen; und
Änderung der Verwendung von Rahmen oder Tabellen.

12. System nach Anspruch 10 oder Anspruch 11, wobei die Hindernisse, die zum Entfalten auswählbar sind, auch die Generierung einer Warnung oder einer Mitteilung des Seitenmissbrauchs umfassen.

13. System nach Anspruch 12, wobei die generierte Warnung oder Mitteilung einem oder mehreren aus einem in Verdacht stehenden Robot-System, einem Benutzer davon, einem Rogue-System oder - Benutzer, einer Bedienperson oder einem Eigentümer der Seite, die einen Missbrauch erfährt, einer Überwachungsstation oder einer Kontrollstelle zugestellt wird.

14. System nach einem der Ansprüche 10 bis 13, wobei die Hindernisse, die zum Entfalten auswählbar sind, auch die Begrenzung der Bandbreite, die Sperrung eines Kontos und die Beendigung des Zugriffs umfassen.

15. System nach einem der Ansprüche 10 bis 14, wobei das System auch ein oder mehrere eingebaute Hindernisse für Robot- oder Rogue-Zugriffe umfasst.

16. System nach Anspruch 15, wobei die in dem System eingebauten Hindernisse wenigstens eines aus einem regulären Webseiten-Rekonstruktionsprogramm, Änderungen in den Formularfeldern in der Webseite und Fallen, die rekursive Schleifen enthalten, umfassen.

17. System nach einem der Ansprüche 10 bis 16, wobei das Erfassungssystem eines oder mehrere aus dem Folgenden überwacht:
gescheiterte Seitenanforderungen, Fehler, die mit Formularen oder anderen Systemzugriffen assoziiert sind;
IP-Adressen, die Zugriff verlangen;
Modifikation und Aktualisierung von Cookies;
Kontrolllisten; und
Benutzerregistrierungseinzelheiten, Benutzerprofile, Benutzerdomänen oder Benutzerzugriffszeiten.

18. System nach einem der Ansprüche 10 bis 17, das des Weiteren einen Datenspeicher umfasst, in dem die überwachten und/oder erfassten Einzelheiten aufgezeichnet werden.

## Revendications

1. Procédé pour combattre des accès non souhaités de robot ou de pirate à un site web, comprenant les stades dans lesquels :
on surveille (202, 304) des accès faits au site web afin de faciliter la détection d'accès de robot ou de pirate ; et
**caractérisé par** les stades supplémentaires dans lesquels :
après détection (204, 308) qu'un accès de robot ou de pirate est en cours, on fait sortir (206, 312, 314) un ou plusieurs obstacles à cet accès,
l'obstacle ou les plusieurs obstacles étant des formes de changement dynamique d'agencement de page dans le site web.

2. Procédé suivant la revendication 1, dans lequel on choisit les formes de changement dynamique de l'agencement de page parmi :
l'utilisation de textes cachés, d'éléments de table ou de champs de commentaire ;
on renomme ou on rend aléatoires des champs d'entrée ou des noms de formulaire ;
l'addition d'informations redondantes, de pages intermédiaires, de stades de traitement, de champs de formulaire redondants, de boîtes de dialogue, de stades de traitement de page, de réacheminements ; et
le changement de l'utilisation de trames ou de tables.

3. Procédé suivant la revendication 1 ou la revendication 2, dans lequel on peut sélectionner un obstacle supplémentaire, cet obstacle étant la production d'un avertissement ou d'une notification d'un abus de site.

4. Procédé suivant la revendication 3, dans lequel on envoie l'avertissement ou la notification produite à un ou à plusieurs d'un système de robot suspecté, de son utilisateur, d'un système pirate ou de son utilisateur, d'un opérateur ou du propriétaire du site subissant un abus, d'un poste de surveillance ou d'un bureau chargé de faire respecter la loi.

5. Procédé suivant l'une quelconque des revendications 1 à 4, dans lequel on peut sélectionner aussi un ou plusieurs autres obstacles choisis parmi la limitation de la largeur de bande, la suspension d'un compte et le fait de mettre fin à l'accès.

6. Procédé suivant l'une quelconque des revendications précédentes, dans lequel le stade de détection d'accès de ce genre comprend l'identification (308) au début d'un accès possible d'un robot ou d'un pirate à un site web et la mise en oeuvre d'une ou de plusieurs vérifications afin de déterminer davantage le statut d'une entité faisant/demandant l'accès.

7. Procédé suivant l'une quelconque des revendications précédentes, dans lequel on utilise une différentiation entre les caractéristiques comportementales d'utilisateurs différents pour faciliter une détection.

8. Procédé suivant l'une quelconque des revendications précédentes, dans lequel on effectue le stade de surveillance à la fois en temps réel et hors-ligne.

9. Procédé suivant l'une quelconque des revendications précédentes, dans lequel le stade de surveillance comprend la surveillance d'une ou de plusieurs :
requêtes de pages manquantes, défauts associés à des formulaires ou à d'autres accès au système ;
adresses IP d'accession au site web ;
modifications et mises à jour de témoins ;
listes d'attente ; et
enregistrements d'utilisateur, profils d'utilisateur, domaines d'utilisateur, temps d'accès d'utilisateur.

10. Système (100) configuré pour combattre des accès non souhaités de robot ou de pirate à un site web, comprenant :
au moins un système (106) de détection configuré pour recevoir des requêtes d'accès arrivantes par un utilisateur du site web et pour détecter si un accès de robot ou de pirate est en cours ; et
**caractérisé par** :
un générateur (106) d'obstacle pour engendrer et faire sortir un ou plusieurs obstacles à cet accès après sa détection,
dans lequel l'obstacle ou les plusieurs obstacles sont des formes de changement dynamique d'agencement de page dans le site web.

11. Système suivant la revendication 10, dans lequel les formes de changement dynamique du changement de page sont choisies parmi :
l'utilisation de textes cachés, d'éléments de table ou de champs de commentaire ;
on renomme ou on rend aléatoires des champs d'entrée ou des noms de formulaire ;
l'addition d'informations redondantes, de pages intermédiaires, de stades de traitement, de champs de formulaire redondante, de boîtes de dialogue, de stades de traitement de page, de réacheminements ; et
le changement de l'utilisation de trames ou de tables.

12. Système suivant la revendication 10 ou la revendication 11, dans lequel les obstacles qui peuvent être choisis comprennent aussi la production d'un avertissement ou d'une notification d'un abus de site.

13. Système suivant la revendication 12, dans lequel on envoie l'avertissement ou la notification produite à un ou à plusieurs d'un système de robot suspecté, de son utilisateur, d'un système pirate ou de son utilisateur, d'un opérateur ou du propriétaire du site subissant un abus, d'un poste de surveillance ou d'un bureau chargé de faire respecter la loi.

14. Système suivant l'une quelconque des revendications 10 à 13, dans lequel les obstacles qui peuvent être choisis comprennent aussi la limitation de la largeur de bande, la suspension d'un compte et le fait de mettre fin à l'accès.

15. Système suivant l'une quelconque des revendications 10 à 14, dans lequel le système comprend aussi un ou plusieurs obstacles incorporés à des accès de robot ou de pirate.

16. Système suivant la revendication 15, dans lequel les obstacles incorporés au système comprennent au moins un schéma régulier de reconstruction du site web, des changements pour former des champs dans le site web et des pièges, y compris des boucles récursives.

17. Système suivant l'une quelconque des revendications 10 à 16, dans lequel le système de détection surveille un ou plusieurs de :
requêtes de pages manquantes, défauts associés à des formulaires ou à d'autres accès au système;
adresses IP d'accession au site web ;
modifications et mises à jour de témoins ;
listes d'attente ; et
enregistrements d'utilisateur, profils d'utilisateur, domaines d'utilisateur, temps d'accès d'utilisateur.

18. Système suivant l'une quelconque des revendications 10 à 17, comprenant, en outre, une mémoire de données, dans laquelle sont enregistrés les détails surveillés et/ou détectés.
